(19) Europäisches Patentamt / European Patent Office / Office européen des brevets

(11) **EP 3 199 657 B1**

(12) **EUROPEAN PATENT SPECIFICATION**

(45) Date of publication and mention of the grant of the patent:
**13.02.2019 Bulletin 2019/07**

(21) Application number: **15843336.7**

(22) Date of filing: **06.08.2015**

(51) Int Cl.:
| | |
|---|---|
| *C22C 38/00* (2006.01) | *B23K 11/00* (2006.01) |
| *C21D 8/02* (2006.01) | *C22C 38/16* (2006.01) |
| *C22C 38/54* (2006.01) | *B21B 1/26* (2006.01) |
| *C22C 38/02* (2006.01) | *B21C 37/08* (2006.01) |
| *B23K 11/087* (2006.01) | *C21D 8/10* (2006.01) |
| *C21D 9/08* (2006.01) | *C21D 9/50* (2006.01) |
| *C22C 38/04* (2006.01) | *C22C 38/06* (2006.01) |
| *C22C 38/08* (2006.01) | *C22C 38/12* (2006.01) |
| *C22C 38/14* (2006.01) | *B23K 11/16* (2006.01) |
| *B23K 101/06* (2006.01) | *B23K 103/04* (2006.01) |

(86) International application number:
**PCT/JP2015/003972**

(87) International publication number:
**WO 2016/047023 (31.03.2016 Gazette 2016/13)**

(54) **STEEL STRIP FOR ELECTRIC-RESISTANCE-WELDED STEEL PIPE OR TUBE, ELECTRIC-RESISTANCE-WELDED STEEL PIPE OR TUBE, AND PROCESS FOR PRODUCING STEEL STRIP FOR ELECTRIC-RESISTANCE-WELDED STEEL PIPE OR TUBE**

STAHLBAND FÜR WIDERSTANDSGESCHWEISSTES STAHLROHR, WIDERSTANDSGESCHWEISSTES STAHLROHR UND VERFAHREN ZUR HERSTELLUNG DES STAHLBANDES FÜR WIDERSTANDSGESCHWEISSTES STAHLROHR

BANDE D'ACIER POUR TUYAU OU TUBE D'ACIER SOUDÉ PAR RÉSISTANCE ÉLECTRIQUE, TUYAU OU TUBE D'ACIER SOUDÉ PAR RÉSISTANCE ÉLECTRIQUE, ET PROCÉDÉ DE PRODUCTION DE BANDE D'ACIER POUR TUYAU OU TUBE D'ACIER SOUDÉ PAR RÉSISTANCE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2014 JP 2014195322**

(43) Date of publication of application:
**02.08.2017 Bulletin 2017/31**

(73) Proprietor: **JFE Steel Corporation Tokyo 100-0011 (JP)**

(72) Inventor: **MATSUKI, Yasuhiro Tokyo 100-0011 (JP)**

(74) Representative: **Hoffmann Eitle Patent- und Rechtsanwälte PartmbB Arabellastraße 30 81925 München (DE)**

(56) References cited:
| | |
|---|---|
| **WO-A1-2013/153819** | **WO-A1-2014/002423** |
| **JP-A- 2004 003 014** | **JP-A- 2005 240 051** |
| **JP-A- 2013 124 393** | **JP-A- 2014 009 366** |

**Description**

TECHNICAL FIELD

The disclosure relates to a steel strip for an electric-resistance-welded steel pipe or tube, and particularly relates to a steel strip for an electric-resistance-welded steel pipe or tube having excellent sour resistance and suitable as a raw material of a line pipe for transporting oil, natural gas, etc.

The disclosure also relates to a steel pipe or tube manufactured using the steel strip for an electric-resistance-welded steel pipe or tube, and a process for producing the steel strip for an electric-resistance-welded steel pipe or tube.

BACKGROUND

The development of oil wells drilled for oil or natural gas has been shifting to deep wells with high corrosiveness, as shallow wells with low corrosiveness have been increasingly dried out. This has increased the demand for steel pipes or tubes used as line pipes for sour gas or sour oil containing hydrogen sulfide.

In pipelines operated under high pressure, UOE steel pipes or tubes have been widely used as steel pipes or tubes for line pipes. In recent years, however, high-strength electric-resistance-welded steel pipes or tubes have been replacing UOE steel pipes or tubes, to reduce pipeline construction costs or steel pipe or tube material costs. A high-strength electric-resistance-welded steel pipe or tube is obtained by electric resistance welding a hot rolled steel strip into a pipe or tube, with high tensile strength steel being used as a raw material to enhance strength.

However, high tensile strength steel is more susceptible to hydrogen induced cracking (HIC) or sulfide stress cracking (SSC) which occurs in a sour environment, as these are hydrogen brittle fractures caused by hydrogen generated in corrosion reactions. Various studies have therefore been conducted to realize a steel pipe or tube having high strength and sour resistance which are conflicting properties.

For example, JP 2013-11005 A (PTL 1) describes improving sour resistance by setting the area ratio of bainite phase or bainitic ferrite phase to 95% or more in a high-strength hot rolled steel strip for a line pipe with a yield strength of 450 MPa or more.

JP 2006-274338 A (PTL 2) describes improving sour resistance by controlling the structure of steel in a hot rolled steel strip for a high-strength electric-resistance-welded steel pipe or tube. The structure of steel disclosed in PTL 2 is mainly composed of bainitic ferrite or a mixed structure of bainitic ferrite and polygonal ferrite, and has pearlite occupancy of 2 vol% or less.

PTL 3 relates to a high strength electric resistance welded steel pipe and method for producing same, said steel pipe having a specific chemical composition and specific microstructures of a base metal portion and an electric resistance weld zone.

CITATION LIST

Patent Literature

PTL 1: JP 2013-11005 A
PTL 2: JP 2006-274338 A
PTL 3: WO 2014/002423 A1 (corresponding to EP 2 868 765 A1)

SUMMARY

(Technical Problem)

In the steel strips described in PTL 1 and PTL 2, pearlite structure known to have poor sour resistance is reduced, and so HIC resistance is improved to a certain extent.

However, even these steel strips do not have sufficient HIC resistance against highly corrosive sour gas or sour oil produced in recent years, and further improvement in HIC resistance has been desired.

It could therefore be helpful to provide a steel strip for an electric-resistance-welded steel pipe or tube having a strength of X70 grade or more and excellent HIC resistance and SSC resistance. It could also be helpful to provide an electric-resistance-welded steel pipe or tube formed using the steel strip as a material, and a process for producing the steel strip. X70 grade is a grade of line pipe materials defined in the American Petroleum Institute (API) standards, and means a yield strength (YS) of 485 MPa or more.

(Solution to Problem)

As a result of studying the influence of the chemical composition or structure of steel on HIC resistance, we discovered the following:

(1) Bainite structure has better sour resistance than pearlite structure. However, bainite structure is the same as pearlite structure in that it consists of ferrite phase and cementite phase, and so its sour resistance is not sufficient.
(2) In the case where the structure of steel is mainly composed of bainite or bainitic ferrite, the structure tends to vary depending on the temperature conditions during manufacture, and it is difficult to attain high HIC resistance throughout the steel strip.
(3) By making the structure of steel as ferrite single phase, excellent HIC resistance can be realized throughout the steel strip without variation.
(4) By using a steel raw material containing, in high concentrations, Nb, V, and Ti which are elements for strengthening by precipitation and controlling the temperature conditions during manufacture, fine precipitates can be formed to increase the strength of the steel strip, and also the generation of pearlite structure or bainite structure can be prevented to realize a structure mainly composed of ferrite.

Based on the aforementioned discoveries, we conducted detailed study on the chemical composition and structure of steel and the manufacturing conditions.
We provide the following:

(1) A steel strip for an electric-resistance-welded steel pipe or tube, the steel strip having a chemical composition containing (consisting of), in mass%: C: 0.02% to 0.06%; Si: 0.1% to 0.3%; Mn: 0.8% to 1.3%; P: 0.01% or less; S: 0.001% or less; V: 0.04% to 0.07%; Nb: 0.04% to 0.07%; Ti: 0.01% to 0.04%; Cu: 0.2% to 0.3%; Ni: 0.1% to 0.3%; Ca: 0.001% to 0.005%; Al: 0.01% to 0.07%; N: 0.007% or less; optionally Sn: 0.05% or less; and optionally Cr, Mo, and B as incidental impurities in an amount of Cr: 0.05% or less; Mo: 0.03% or less; and B: 0.0005% or less, with a balance being Fe and incidental impurities, contents of C, Nb, V, and Ti satisfying a condition in the following Expression (1)

$$[C] - 12([Nb]/92.9 + [V]/50.9 + [Ti]/47.9) \leq 0.03\% \quad ... (1)$$

where [M] is content of element M in mass%, wherein a ferrite area ratio is 90% or more.
(2) The steel strip for an electric-resistance-welded steel pipe or tube according to the foregoing (1), wherein the chemical composition further satisfies a condition in the following Expression (2)

$$[Ti]/47.9 \geq [N]/14 \quad\quad\quad ... (2)$$

where [M] is content of element M in mass%.
(3) An electric-resistance-welded steel pipe or tube formed using the steel strip for an electric-resistance-welded steel pipe or tube according to any one of the foregoing (1) or (2) as a material.
(4) A process for producing a steel strip for an electric-resistance-welded steel pipe or tube, the method including: hot rolling a steel raw material into a steel strip; cooling the steel strip; and coiling the cooled steel strip, wherein the steel raw material has a chemical composition containing, in mass%: C: 0.02% to 0.06%; Si: 0.1% to 0.3%; Mn: 0.8% to 1.3%; P: 0.01% or less; S: 0.001% or less; V: 0.04% to 0.07%; Nb: 0.04% to 0.07%; Ti: 0.01% to 0.04%; Cu: 0.2% to 0.3%; Ni: 0.1% to 0.3%; Ca: 0.001% to 0.005%; Al: 0.01% to 0.07%; N: 0.007% or less; optionally Sn: 0.05% or less; and optionally Cr, Mo, and B as incidental impurities in an amount of Cr: 0.05% or less; Mo: 0.03% or less; and B: 0.0005% or less, with a balance being Fe and incidental impurities, contents of C, Nb, V, and Ti satisfying a condition in the following Expression (1)

$$[C] - 12([Nb]/92.9 + [V]/50.9 + [Ti]/47.9) \leq 0.03\% \quad ... (1)$$

where [M] is content of element M in mass%, the hot rolling includes rough rolling and finish rolling, a finish entry temperature in the finish rolling is 950 °C or less, a finish delivery temperature in the finish rolling is 780 °C to 850 °C, a cooling rate in the cooling is 20 °C/s to 100 °C/s, and a coiling temperature in the coiling is 550 °C to 700 °C.

(Advantageous Effect)

It is thus possible to obtain a steel strip for an electric-resistance-welded steel pipe or tube having a yield strength (YS) of 485 MPa or more and excellent HIC resistance. The steel strip has substantially a ferrite single-phase structure, and accordingly has less variation in HIC resistance than steel strips mainly composed of bainite phase or bainitic ferrite phase. Moreover, the use of high concentrations of elements for strengthening by precipitation makes it possible to stably improve strength by carbide formation and improve sour resistance by ferrite precipitation, with no need to significantly decrease the coiling temperature.

BRIEF DESCRIPTION OF THE DRAWINGS

In the accompanying drawings:

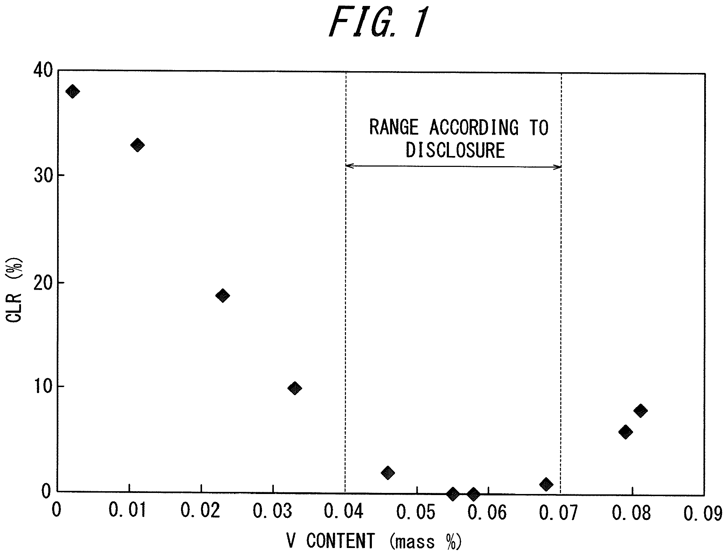

FIG. 1 is a diagram illustrating the influence of V content in steel on HIC resistance.

DETAILED DESCRIPTION

Detailed description is given below.
In a steel strip for an electric-resistance-welded steel pipe or tube according to the disclosure, it is important that the steel has a predetermined chemical composition and structure. The reasons for limiting the chemical composition of the steel as stated above are described first. In the following description, "%" regarding components denotes "mass%" unless otherwise noted.

C: 0.02% to 0.06%

C is an element having an action of enhancing the strength of the steel by forming precipitates with elements such as Nb, V, and Ti. To achieve the effect, the C content in the steel needs to be 0.02% or more. If the C content is too high, the amount of C remaining without forming precipitates increases, which causes the generation of pearlite structure or bainite structure and decreases sour resistance. The C content in the steel therefore needs to be 0.06% or less. The C content is preferably 0.03% or more. The C content is preferably 0.05% or less. Note that the C content needs to be adjusted according to the Nb, V, and Ti contents as described later.

Si: 0.1% to 0.3%

Si is a ferrite forming element. To form fine precipitates from ferrite, the Si content needs to be appropriate to the amounts of other additive elements. The Si content is therefore 0.1% to 0.3%. The Si content is preferably 0.15% or more. The Si content is preferably 0.25% or less.

Mn: 0.8% to 1.3%

Mn is an element having an effect of delaying ferrite transformation to generate fine precipitates during quenching after finish rolling. To achieve the effect, the Mn content in the steel needs to be 0.8% or more. If the Mn content is too high, pearlite tends to precipitate. This tendency is noticeable in a strip thickness center part where Mn tends to concentrate due to segregation. It is therefore important to limit the Mn content to 1.3% or less. The Mn content is preferably 0.9% or more. The Mn content is preferably 1.1%. or less.

P: 0.01% or less

P is an element that easily segregates in the steel, and degrades sour resistance as a result of segregation. It is therefore important to limit the P content to 0.01% or less. The P content is preferably 0.006% or less. The lower limit of the P content is not limited, and may be 0%, although industrially more than 0%. Excessively low P content leads to longer refining time and higher cost, and so the P content is preferably 0.001% or more.

S: 0.001% or less

S forms a sulfide in the steel, and decreases sour resistance. To prevent this, it is important to limit the S content to 0.001% or less. The S content is preferably 0.0006% or less. The lower limit of the S content is not limited, and may be 0%, although industrially more than 0%. Excessively low S content leads to longer refining time and higher cost, and so the S content is preferably 0.0003% or more.

V: 0.04% to 0.07%

V is an element having a property of forming a carbide with C in the steel and precipitating. The precipitation of the carbide enhances the strength of the steel (strengthening by precipitation). The precipitation of the carbide also decreases effective C concentration in the steel, and suppresses the formation of pearlite structure or bainite structure. To achieve the effects, it is important to limit the V content to 0.04% or more. Excessive V forms coarse composite precipitates with other precipitates, and degrades sour resistance. The V content is therefore 0.07% or less. The V content is preferably 0.05% or more. The V content is preferably 0.06% or less.

Nb: 0.04% to 0.07%

Nb is an element that contributes to higher strength of the steel through strengthening by precipitation, as with V. Nb also has an action of decreasing effective C concentration in the steel and suppressing the formation of pearlite structure or bainite structure. To achieve the effects, it is important to limit the Nb content to 0.04% or more. If the Nb content is too high, the effect of strengthening by precipitation saturates, and a strength increase consistent with the content cannot be attained. Besides, excessive Nb forms coarse composite precipitates with other precipitates, and degrades sour resistance. The Nb content is therefore 0.07% or less. The Nb content is preferably 0.05% or more. The Nb content is preferably 0.06% or less.

Ti: 0.01% to 0.04%

Ti is a carbide forming element, too, but has a property of more preferentially reacting with N in the steel to form a nitride than V or Nb. Accordingly, by adding an appropriate amount of Ti to the steel, Nb and V can be kept from reacting with N, thus ensuring the formation of carbides of Nb and V. To achieve the effect, it is important to limit the Ti content to 0.01% or more. If the Ti content is less than 0.01%, a coarse precipitate such as Nb(CN) or V(CN) is generated to decrease the sour resistance of the steel. If the Ti content is excessively high, more TiC is generated and forms a coarse composite precipitate with a precipitate of Nb or V, which decreases the sour resistance of the steel. The Ti content is therefore 0.04% or less. The Ti content is preferably 0.02% or more. The Ti content is preferably 0.03% or less.
It is thus necessary to regulate each of the contents of V, Nb, and Ti individually. In addition, it is very important to control the balance between the contents of the three elements V, Nb, and Ti and the C content within a predetermined range. This will be described in detail later.

Cu: 0.2% to 0.3%

Cu is an element having an action of delaying ferrite transformation and causing carbides of Nb, Ti, V, and the like to precipitate finely. Cu is also an element that suppresses corrosion in a corrosive environment and reduces the hydrogen intrusion amount to improve sour resistance. To achieve the effects, the Cu content is 0.2% or more. If Cu is added excessively, the effects saturate. Besides, excessive Cu increases the roughness of the steel strip surface, as a result of which the hydrogen intrusion amount in the corrosive environment increases and the sour resistance of the steel decreases. The Cu content is therefore 0.3% or less.

Ni: 0.1% to 0.3%

Ni is an element having an action of delaying ferrite transformation and causing carbides of Nb, Ti, V, and the like to precipitate finely, as with Cu. Ni is also an element that suppresses corrosion in a corrosive environment and reduces the hydrogen intrusion amount to improve sour resistance, as with Cu. These effects are enhanced when the steel contains both Cu and Ni. To achieve the effects, the Ni content is 0.1% or more. If Ni is added excessively, the effects saturate. Besides, excessive Ni increases the roughness of the steel strip surface, as a result of which the hydrogen intrusion amount in the corrosive environment increases and the sour resistance of the steel decreases. The Ni content is therefore 0.3% or less. The Ni content is preferably 0.1% or more. The Ni content is preferably 0.2% or less.

Ca: 0.001% to 0.005%

Ca is an element having an action of making any sulfide contained in the steel spherical to improve sour resistance. To achieve the effect, the Ca content needs to be determined depending on the S content. The Ca content in the steel needs to be 0.001% or more. If the Ca content is less than 0.001%, S is not made spherical sufficiently. If the Ca content is too high, a coarse sulfide is generated and sour resistance decreases. The Ca content is therefore 0.005% or less. The Ca content is preferably 0.002% or more. The Ca content is preferably 0.003% or less.

Al: 0.01% to 0.07%

Al is an element added as a deoxidizer. If the Al content is less than 0.01%, Ca forms an oxide, which makes it impossible to sufficiently achieve the effect of Ca in making sulfide spherical. If the Al content is more than 0.07%, coarse alumina is generated and sour resistance decreases. The Al content is therefore 0.01% to 0.07%. The Al content is preferably 0.02% or more. The Al content is preferably 0.04% or less.

N: 0.007% or less

N is an element that forms a nitride with Ti, etc. The formation of fine carbides is needed in the disclosure to attain high strength equivalent to X70 grade. If the N content is high, the elements for strengthening by precipitation, such as Nb and V, form not carbides but nitrides, making it impossible to attain sufficient strength. The N content is therefore 0.007% or less. The N content is preferably 0.005% or less. The lower limit of the N content is not limited, and may be 0%, although industrially more than 0%. In the steel with low C content as in the disclosure, the N content is preferably 0.0010% or more and more preferably 0.0015% or more, to suppress the grain growth of the weld and ensure the strength and toughness of the weld. The N content is further preferably 0.0035% or more. The N content is further preferably 0.0045% or less.

The steel strip for an electric-resistance-welded steel pipe or tube has balance that is Fe and incidental impurities, in addition to the aforementioned components. It is important that the steel has the aforementioned chemical composition, in order to attain both the strength and sour resistance of the steel which are conflicting properties.

The steel strip preferably does not contain the following elements. In the case where the steel strip incidentally contains these elements, their concentrations are as follows:

Cr: 0.05% or less;
Mo: 0.03% or less; and
B: 0.0005% or less.

Their concentrations are more preferably as follows:

Cr: 0.02% or less;
Mo: 0.01% or less; and
B: 0.0002% or less.

In particular, if the Mo content is high, Mo may form coarse composite precipitates with Ti, Nb, V, etc. and cause degradation in HIC resistance, depending on the manufacturing conditions. Hence, to ensure HIC resistance more stably, it is important to limit the contents of Cr, Mo, and B to the aforementioned ranges. The contents of Cr, Mo, and B are preferably as low as possible, and may each be 0%, or industrially more than 0%.

In addition to the aforementioned elements, the steel may contain 0.05% or less Sn. The Sn content is preferably 0.02% or less.

Meanwhile, W is not intentionally added to the steel, in order to distinguish W from Cu, Ni, etc. This is because W has an action of excessively delaying ferrite transformation. If W is added, the intended ferrite phase is hard to be obtained, and bainite phase tends to precipitate. Besides, since W is an element having an action of enhancing quench hardenability, adding a large amount of W may cause a local increase in strength depending on the cooling conditions and the like. In such a case, the corresponding part needs to be removed, which results in a lower yield rate. Accordingly, the W content in the steel is preferably as low as possible. In detail, the W content is preferably 0.03% or less, and more preferably 0.01% or less. The lower limit of the W content is not particularly limited, and may be 0%, or industrially more than 0%.

- C, Nb, V, and Ti

In addition to satisfying the aforementioned condition for each of the contents of the elements contained in the steel, it is also important that the contents of the three elements V, Nb, and Ti and the C content satisfy the condition in the following Expression (1):

$$[C] - 12([Nb]/92.9 + [V]/50.9 + [Ti]/47.9) \leq 0.03\% \quad \ldots (1)$$

where [M] is the content of element M in mass%.

Nb, V, and Ti which are carbide forming elements form carbides with C in the steel and precipitate. These elements thus have an action of decreasing effective C concentration in the steel, in addition to an action of improving the strength of the steel. The effective C concentration mentioned here is the C content in the steel except C that has formed carbides with alloying elements and precipitated.

Nb, V, and Ti mainly form MC-type carbides of an atom ratio of 1:1 with C. Accordingly, supposing that all Nb, V, and Ti contained in the steel form carbides, the effective C concentration can be expressed as [C] - 12([Nb]/92.9 + [V]/50.9 + [Ti]/47.9) using the atomic weights of the elements. Given that the structure of the steel needs to be ferrite single phase as described later, the effective C concentration needs to be 0.03% or less. Here, 0.03% is equivalent to the amount of C that can be dissolved in ferrite during ferrite precipitation. The value of the left side in Expression (1) is preferably 0.02% or less, to reduce carbides precipitating in ferrite during the period from ferrite precipitation to cooling to ambient temperature. The value of the left side in Expression (1) is preferably more than 0%, to suppress crystal grain coarsening in the weld.

The precipitation of carbides does not occur merely by the presence of the elements such as Nb, V, and Ti. Appropriate carbide precipitation and ferrite structure formation are achieved only when the chemical composition of the steel satisfies the aforementioned conditions and also the steel strip is manufactured under appropriate temperature conditions. The temperature conditions during manufacture will be described in detail later.

These carbide forming elements, in particular a part of Ti, actually form not carbides but nitrides. Accordingly, the value of the left side in Expression (1) does not precisely match the actual effective C concentration. Within the range of the conditions according to the disclosure, however, it is effective to control the chemical composition based on Expression (1), as described later in examples.

- Ti and N

Moreover, the Ti content and N content in the steel preferably satisfy the condition in the following Expression (2):

$$[\mathrm{Ti}]/47.9 \geq [\mathrm{N}]/14 \qquad\qquad \ldots (2)$$

where [M] is the content of element M in mass%.

Ti has a property of forming a nitride more easily than V or Nb, as mentioned earlier. Hence, by adding a sufficient amount of Ti to the steel, Nb or V can be prevented from reacting with N and forming a coarse precipitate. To achieve the effect, Ti contained in the steel is preferably greater in atom equivalent ratio than N. Expression (2) represents this relationship using the atomic weights of the two elements.

- Influence of V content

It is important to control the contents of the elements for strengthening by precipitation in the steel, as mentioned above. As an example, the influence of the V content on the HIC resistance of the steel strip was experimentally determined by the following method.

10 types of steel strips with different V contents were produced, and each subjected to a HIC test to measure the crack length ratio (CLR) which is an index of the likelihood of HIC. Each steel strip was produced according to the following procedure. First, molten steel having a predetermined composition was prepared by steelmaking in a converter, and formed into a slab of 250 mm in thickness by continuous casting. The obtained slab was then heated to 1220 °C to 1240 °C and hot rolled. In the hot rolling, the slab was first rough rolled into a sheet bar of 45 mm in thickness, and then finish rolled into a steel strip of 11.3 mm in thickness and 1080 mm in width. The obtained steel strip was water cooled on a run-out table (ROT), and then coiled. The manufacturing conditions were as follows: finish entry temperature: 890 °C to 910 °C; finish delivery temperature: 785 °C to 805 °C; finish rolling time (period from the start to end of finish rolling): 4 seconds; cooling (water cooling) rate on an ROT: 24 °C/s to 37 °C/s; and coiling temperature: 585 °C to 615 °C.

The V content was changed from 0.002% (no addition) to 0.081%. The contents of the elements other than V were as follows:

C: 0.033% to 0.045%;
Si: 0.16% to 0.23%;
Mn: 0.92% to 1.07%;
P: 0.003% to 0.005%;
S: 0.0003% to 0.0007%;
Nb: 0.050% to 0.058%;
Ti: 0.021% to 0.029%;

Cu: 0.22% to 0.28%;
Ni: 0.12% to 0.18%;
Ca: 0.0022% to 0.0029%;
Al: 0.023% to 0.038%;
N: 0.0036% to 0.0045%;
Cr: 0.02%;
Mo: 0.01%; and
B: less than 0.0001%,

with the balance being Fe and incidental impurities.

The contents of the elements other than V and the temperature conditions during manufacture vary to some extent, due to manufacturing limitations. However, these variations are sufficiently small as compared with the variation width of the V content, and so the differences in property between the obtained plurality of steel strips can be regarded as deriving from the differences in V content.

The CLR value was measured based on a HIC test method in the below-mentioned examples. FIG. 1 plots the CLR value measured for each steel strip against the V content. In the steel strips with V content within the range according to the disclosure, HIC hardly occurred. In the steel strips with V content not within the range according to the disclosure, HIC was greater when the V content deviated more from the range. While only the influence of the V content is described here, we confirmed that the Nb content and the Ti content had the same influence on HIC resistance. These results and the results of the below-mentioned examples and comparative examples demonstrate that controlling the contents of V, Nb, and Ti is important in improving sour resistance.

- Structure of steel

The reasons for limiting the structure of the steel are described below.

It is important to limit the ferrite area ratio in the structure of the steel to 90% or more. Pearlite structure has poor sour resistance, and is preferably not contained in the steel. Bainite structure has better sour resistance than pearlite structure, but is the same as pearlite structure in that it consists of ferrite phase and cementite phase, and so its sour resistance is not sufficient. Hence, the structure of the steel in the disclosure is substantially ferrite single phase. Substantially ferrite single phase means that the ferrite area ratio is 90% or more. The ferrite area ratio is preferably 95% or more. Such a high ferrite area ratio can be obtained by controlling the chemical composition of the steel as mentioned above and also manufacturing the steel strip under specific temperature conditions. The upper limit of the ferrite area ratio is not particularly limited, and may be 100%. Here, the term "ferrite" does not cover "bainitic ferrite" generated at a low temperature of about 500 °C close to the martensite transformation temperature. Bainitic ferrite generated at such a low temperature has low content of C that can be dissolved, and C that cannot be dissolved forms cementite ($Fe_3C$) and degrades sour resistance.

Structures other than ferrite phase are preferably as little as possible. However, since the influence of the structure of the balance is substantially negligible if the area ratio of ferrite phase is sufficiently high, it is allowable to contain less than 10% in total area ratio of one or more structures other than ferrite, such as bainite and martensite. These structures other than ferrite are preferably less than 5% in total area ratio. The ferrite area ratio is preferably as high as possible as mentioned above, and so the lower limit of the area ratio of the structures other than ferrite phase is not particularly limited and may be 0%.

- Manufacturing method

The following describes a process for producing the steel strip.

First, a steel raw material having the aforementioned chemical composition is obtained by steelmaking according to a conventional method. The steel raw material is preferably produced by continuous casting, to prevent the formation of pearlite structure as a result of segregation, in particular central segregation. A slab obtained by continuous casting is preferably 200 mm or more in thickness. This facilitates recrystallization during rough rolling in a hot rolling step, and suppresses the formation of pearlite structure due to segregation. If the slab is too thick, the overall temperature of the slab does not increase during heating, making it difficult to dissolve precipitates sufficiently. Accordingly, the thickness of the slab is preferably 300 mm or less. The thickness of the slab is more preferably 240 mm or more. The thickness of the slab is more preferably 260 mm or less.

The slab is then heated to a predetermined heating temperature, and subjected to hot rolling that involves rough rolling and finish rolling. The heating temperature is preferably 1200 °C or more, to dissolve precipitates in the steel. If the heating temperature is too high, crystal grains grow and as a result the diffusion of crystal grains with concentrated elements in hot rolling is insufficient, which facilitates the precipitation of pearlite due to segregation.

Accordingly, the heating temperature is preferably 1250 °C or less.

After the heating, the steel raw material is rough rolled into a sheet bar. The thickness of the sheet bar is preferably 40 mm or more, to increase rolling reduction in the subsequent finish rolling. The thickness of the sheet bar is preferably 60 mm or less, to ensure certain rolling reduction in the rough rolling and suppress segregation.

The obtained sheet bar is finish rolled into a steel strip. The finish entry temperature (finish rolling start temperature) is low, i.e. 950 °C or less, and the finish rolling is performed as rolling in the non-recrystallization temperature range of austenite. If the finish entry temperature is more than 950 °C, the formation of precipitates such as Nb, V, and Ti is not sufficient, and the strength decreases and also the ferrite phase ratio decreases, causing degradation in sour resistance. The finish entry temperature is more preferably 910 °C or less. The lower limit of the finish entry temperature is not particularly limited, but is preferably 850 °C or more.

The finish rolling is preferably performed using a tandem mill for a period from 3 seconds to 15 seconds. The finish delivery temperature (finish rolling end temperature) is 780 °C to 850 °C. If the finish delivery temperature is too low, ferrite precipitates in the surface layer part of the steel strip during the finish rolling, causing degradation in sour resistance. If the finish delivery temperature is more than 850 °C, precipitates such as Nb, V, and Ti are not formed sufficiently, as a result of which the strength of the steel strip decreases and the ferrite phase ratio decreases due to a ferrite precipitation nucleus decrease, causing degradation in sour resistance. The finish delivery temperature is preferably 780 °C or more. The finish delivery temperature is preferably 830 °C or less. The finish delivery temperature is more preferably 780 °C or more. The finish delivery temperature is more preferably 810 °C or less.

When performing the finish rolling, it is allowable to heat the whole sheet bar or only the edge parts of the sheet bar, or to perform the finish rolling after coiling the sheet bar, to ensure the finishing temperature.

The finish rolled steel strip is then cooled to precipitate fine carbides and improve strength. For example, the cooling may be performed by water cooling the steel strip on an ROT. If the cooling rate is low, C in ferrite diffuses and concentrates in non-transformed austenite, facilitating the precipitation of pearlite. To prevent this, the cooling rate in the cooling is 20 °C/s or more. If the cooling rate is too high, it is difficult to uniformly cool the whole steel strip. As a result, the surface layer part of the steel strip hardens preferentially, leading to lower sour resistance and especially lower SSC resistance. To prevent this, the cooling rate is 100 °C/s or less. The cooling rate is preferably 20 °C/s or more. The cooling rate is preferably 50 °C/s or less.

The cooling is started immediately after the finish rolling ends, and performed until the temperature of the steel strip reaches a predetermined coiling temperature. In the case of performing the cooling by water cooling, air cooling or second water cooling may be performed after the water cooling if necessary, in view of heat recuperation and the like. The cooling rate in such processes is not included in the cooling rate defined in the disclosure.

It is preferable to keep the surface temperature of the steel strip from dropping to 500 °C or less, i.e. maintain the surface temperature of the steel strip at more than 500 °C, during the period from the end of the finish rolling to the start of the coiling. This is because more C can be dissolved in ferrite when the temperature of the steel is closer to the $A_1$ transformation point. By causing ferrite to precipitate at relatively high temperature, the precipitation of cementite (pearlite or bainite) can be suppressed.

The cooled steel strip is then coiled. It is important to set the coiling temperature to 550 °C to 700 °C, in order to cause fine carbides to precipitate to improve the strength of the steel strip and also form a structure mainly composed of ferrite. If the coiling temperature is less than 550 °C, strengthening by precipitation is insufficient, and a structure mainly composed of ferrite is hard to be obtained. If the coiling temperature is more than 700 °C, coarse precipitates are formed, which decreases the strength of the steel strip. The coiling temperature is preferably 580 °C or more. The coiling temperature is preferably 620 °C or less. The coiling temperature mentioned here is the surface temperature of the steel strip immediately before the coiling starts.

The steel strip for an electric-resistance-welded steel pipe or tube according to the disclosure can be manufactured by the aforementioned method. The obtained steel strip is then molded and electric-resistance-welded to form an electric-resistance-welded steel pipe or tube. The working and welding conditions for the electric-resistance-welded steel pipe or tube are not particularly limited, and may be well-known conditions in the technical field. In electric resistance welding, the edge parts of the steel strip are butted and bonded together without using weld metal, so that the influence of the work appears clearly on the weld (the edge parts of the steel strip). It is therefore important that the steel strip for an electric-resistance-welded steel pipe or tube has excellent properties such as HIC resistance through to the edge parts.

EXAMPLES

More detailed description is given below, based on examples. The following examples merely represent preferred examples, and the disclosure is not limited to these examples.

Molten steel having each composition shown in Table 1 was prepared by steelmaking in a converter, and made into a slab of 250 mm in thickness by continuous casting. The obtained slab was heated to 1230 °C, and hot rolled. In the hot rolling, the slab was first rough rolled into a sheet bar of 50 mm in thickness, and then finish rolled into a steel strip of 12.5 mm in thickness and 1260 mm in width. The obtained steel strip was water cooled intermittently on an ROT to a predetermined coiling temperature, and then coiled. The conditions of finish rolling, water cooling, and coiling are shown in Table 2. The finish rolling time (the time from the start to end of the finish rolling) was 5 seconds. In the aforementioned manufacturing process, the surface temperature of the steel strip was maintained at more than 500 °C during the period from the finish rolling to the coiling.

The ferrite area ratio, yield strength, tensile strength, HIC resistance, and SSC resistance of each obtained steel strip were measured. Upon measuring the yield strength, tensile strength, HIC resistance, and SSC resistance, working strain was introduced into the test piece beforehand. The introduction of the working strain was performed by a method imitating the introduction of pipe or tube formation-induced strain into an electric-resistance-welded steel pipe or tube, namely, bending-bend restoration work by an R150 press. Typically, introducing working strain facilitates HIC or SSC. Accordingly, the test conditions for HIC resistance and SSC resistance used here are stricter than testing conducted without introducing working strain. The introduction of the working strain also eliminates elongation at yield point, and as a result the same level of yield strength as that after the pipe or tube formation is obtained. The measurement methods and the measurement conditions were as follows.

- Observation of microstructure

A structure observation test piece was produced from the obtained steel strip (no working strain), and its microstructure was observed. The observation was made on a polished and etched section of the test piece in the rolling direction. The observation was performed using an optical microscope ($\times$ 400) and a scanning electron microscope ($\times$ 1000), and the obtained image was analyzed to calculate the ratio of ferrite to the whole structure.

- Tensile test

A rectangular tensile test piece according to ASTM A370 was collected from the steel strip so that the tensile direction was perpendicular to the rolling direction. A tensile test was conducted using the test piece, and yield strength (YS) and tensile strength (TS) were measured. The gauge length (GL) of the test piece was 50 mm.

- HIC test

A HIC test piece was collected from each of the three positions of the steel strip, i.e. a center part in the width direction, a 1/4 width part, and an edge part, so that the length direction of the test piece was the rolling direction of the steel strip. The dimensions of the test piece were 20 mm in width $\times$ 100 mm in length, with the thickness being equal to the thickness of the steel strip (only polishing was applied). Working strain was introduced into the obtained test piece by the aforementioned method, and then a HIC test was conducted according to NACE-TM0284. In the test, the test piece was immersed in A solution (a solution obtained by saturating an aqueous solution of 5.0% NaCl + 0.50% $CH_3COOH$ by $H_2S$) for 96 hours. After this, cracking in the test piece was measured by ultrasonic testing, and the crack length ratio (CLR) defined as "(total length of measured cracking)/(test piece length) $\times$ 100%" was calculated for three sections with largest cracking.

- SSC test

An SSC test piece was collected from a center part of the steel strip in the width direction and the thickness direction so that the length direction of the test piece was the rolling direction of the steel strip. The dimensions of the test piece were 15 mm in width $\times$ 120 mm in length $\times$ 5 mm in thickness, and three test pieces of the same shape and dimensions were collected from one steel strip. Each test piece was collected by grinding one surface of the steel strip (non-grinded surface was unchanged from the steel strip). Working strain was introduced into the obtained test piece by the aforementioned method, and then a four-point bending test was conducted under the conditions conforming to NACE-TM0177 so that the non-grinded surface was on the outside. In the test, the test piece was immersed in the same A solution as that used in the HIC test, and held for 720 hours under stress of 437 MPa. This stress is equivalent to 90% of 485 MPa which is the standard minimum yield stress (SMYS) in X70 grade of the API standards. After this, the surface of the test piece was observed using an optical microscope at 10-fold magnification, and each steel strip with no cracking was rated good and each steel strip with cracking found in at least one test piece was rated poor.

The measurement results are shown in Table 2. Steel strips Nos. 1 to 9 whose chemical composition of steel and ferrite area ratio satisfied the conditions according to the disclosure all showed YS and TS values of X70 grade or more, and had no SSC. In particular, steel strips Nos. 1 to 4 had a CLR value of 0%, in all of the test pieces collected from the three parts of the steel strip. These results indicate that the whole steel strip according to the disclosure has excellent sour resistance without variation.

On the other hand, steel strips No. 10 with a higher finish entry temperature, No. 11 with a higher finish delivery temperature, No, 12 with a lower cooling rate, and No. 13 with a lower coiling temperature failed to attain a sufficient ferrite area ratio, despite having the same chemical composition as steel strips Nos. 1 to 4. As a result, HIC or SSC could not be prevented, and the YS and TS values were somewhat lower than those of steel strips Nos. 1 to 4.

Steel strips Nos. 14, 15, 17, 19, 21, 23, and 24 whose chemical composition of steel did not satisfy the conditions according to the disclosure had a ferrite area ratio of less than 90%, and had HIC or SSC. In steel strips No. 16 with lower S content than the range according to the disclosure, No. 18 with higher V content than the range according to the disclosure, No. 20 with higher Nb content than the range according to the disclosure, and No. 22 with higher Ti content than the range according to the disclosure, the ferrite area ratio was 90% or more, but sulfides (No. 16) or coarse precipitates (Nos. 18, 20, 22) were generated to cause HIC or SSC.

In steel strips Nos. 17, 19, and 21 with any of the contents of V, Nb, and Ti as the elements for strengthening by precipitation lower than the range according to the disclosure, the YS and TS values were low. Steel strip No. 14, though its contents of V, Nb, and Ti satisfied the conditions according to the disclosure, had high C content, and as a result failed to satisfy the condition in Expression (1). Thus, steel strip No. 14 did not have sufficient sour resistance, despite the manufacturing conditions satisfying the conditions according to the disclosure. In steel strip No. 27 with Mo content of 0.12%, the CLR values in the 1/4 width part and edge part were somewhat high, and HIC resistance was lower than that of the steel strips satisfying the conditions according to the disclosure.

In steel strips Nos. 25 and 26 with lower finish delivery temperature or coiling temperature, the ferrite area ratio was low and HIC and SSC occurred, despite the chemical composition of steel satisfying the conditions according to the disclosure. In particular, steel strip No. 26 with a coiling temperature of less than 550 °C had a very low ferrite area ratio of 27%.

These results demonstrate that, when the content of each individual element in steel satisfies the condition according to the disclosure and a steel strip is manufactured under appropriate temperature conditions to achieve a ferrite area ratio of 90%, a steel strip for an electric-resistance-welded steel pipe or tube having a strength of X70 grade or more and also having excellent HIC resistance and SSC resistance with little variation can be obtained.

[Table 1]

Table 1

| Steel sample ID | Chemical composition (mass%) | | | | | | | | | | | | | | Left side of Expression (1) | Remarks |
|---|---|---|---|---|---|---|---|---|---|---|---|---|---|---|---|---|
| | C | Si | Mn | P | S | V | Nb | Ti | Cu | Ni | Ca | Al | N | Mo | | |
| A | 0.042 | 0.21 | 1.04 | 0.006 | 0.0006 | 0.051 | 0.050 | 0.021 | 0.22 | 0.14 | 0.0021 | 0.022 | 0.0034 | - | 0.018 | Conforming steel |
| B | 0.046 | 0.16 | 0.97 | 0.004 | 0.0004 | 0.060 | 0.059 | 0.028 | 0.21 | 0.12 | 0.0023 | 0.037 | 0.0048 | - | 0.017 | Conforming steel |
| C | 0.033 | 0.19 | 0.92 | 0.005 | 0.0003 | 0.055 | 0.051 | 0.029 | 0.26 | 0.18 | 0.0028 | 0.032 | 0.0040 | - | 0.006 | Conforming steel |
| D | 0.031 | 0.23 | 1.10 | 0.003 | 0.0005 | 0.052 | 0.058 | 0.027 | 0.28 | 0.19 | 0.0027 | 0.021 | 0.0024 | - | 0.004 | Conforming steel |
| E | 0.042 | 0.19 | 0.82 | 0.004 | 0.0002 | 0.042 | 0.055 | 0.024 | 0.24 | 0.27 | 0.0022 | 0.051 | 0.0032 | - | 0.019 | Conforming steel |
| F | 0.037 | 0.22 | 1.07 | 0.005 | 0.0007 | 0.053 | 0.067 | 0.025 | 0.28 | 0.10 | 0.0019 | 0.028 | 0.0029 | - | 0.010 | Conforming steel |
| G | 0.030 | 0.29 | 0.99 | 0.003 | 0.0006 | 0.055 | 0.041 | 0.029 | 0.16 | 0.19 | 0.0031 | 0.033 | 0.0041 | - | 0.004 | Comparative steel |
| H | 0.029 | 0.23 | 1.29 | 0.008 | 0.0008 | 0.067 | 0.063 | 0.018 | 0.20 | 0.16 | 0.0028 | 0.029 | 0.0035 | - | 0.001 | Conforming steel |
| I | 0.057 | 0.12 | 0.95 | 0.007 | 0.0005 | 0.048 | 0.067 | 0.031 | 0.22 | 0.17 | 0.0019 | 0.033 | 0.0029 | - | 0.029 | Conforming steel |
| J | 0.066 | 0.22 | 1.14 | 0.005 | 0.0004 | 0.045 | 0.066 | 0.012 | 0.21 | 0.22 | 0.0021 | 0.039 | 0.0019 | - | 0.044 | Comparative steel |
| K | 0.056 | 0.21 | 1.47 | 0.004 | 0.0003 | 0.065 | 0.052 | 0.033 | 0.26 | 0.25 | 0.0016 | 0.042 | 0.0034 | - | 0.026 | Comparative steel |
| L | 0.048 | 0.18 | 1.10 | 0.003 | 0.0017 | 0.049 | 0.049 | 0.036 | 0.29 | 0.20 | 0.0047 | 0.025 | 0.0041 | - | 0.021 | Comparative steel |
| M | 0.034 | 0.21 | 1.01 | 0.006 | 0.0006 | 0.031 | 0.068 | 0.011 | 0.15 | 0.16 | 0.0026 | 0.023 | 0.0034 | - | 0.015 | Comparative steel |

| Steel sample ID | Chemical composition (mass%) | | | | | | | | | | | | | | Left side of Expression (1) | Remarks |
|---|---|---|---|---|---|---|---|---|---|---|---|---|---|---|---|---|
| | C | Si | Mn | P | S | V | Nb | Ti | Cu | Ni | Ca | Al | N | Mo | | |
| N | 0.041 | 0.19 | 1.18 | 0.004 | 0.0004 | 0.078 | 0.049 | 0.022 | 0.22 | 0.20 | 0.0018 | 0.033 | 0.0040 | - | 0.011 | Comparative steel |
| O | 0.041 | 0.24 | 1.29 | 0.006 | 0.0005 | 0.049 | 0.033 | 0.029 | 0.24 | 0.28 | 0.0031 | 0.019 | 0.0049 | - | 0.018 | Comparative steel |
| P | 0.044 | 0.20 | 1.18 | 0.005 | 0.0007 | 0.062 | 0.076 | 0.031 | 0.29 | 0.18 | 0.0027 | 0.030 | 0.0041 | - | 0.012 | Comparative steel |
| Q | 0.052 | 0.26 | 1.11 | 0.003 | 0.0009 | 0.069 | 0.057 | 0.003 | 0.28 | 0.29 | 0.0029 | 0.016 | 0.0067 | - | 0.028 | Comparative steel |
| R | 0.051 | 0.24 | 1.09 | 0.007 | 0.0008 | 0.054 | 0.050 | 0.047 | 0.27 | 0.21 | 0.0021 | 0.033 | 0.0045 | - | 0.020 | Comparative steel |
| S | 0.057 | 0.22 | 1.20 | 0.009 | 0.0007 | 0.050 | 0.069 | 0.040 | 0.03 | 0.01 | 0.0015 | 0.054 | 0.0039 | - | 0.026 | Comparative steel |
| T | 0.048 | 0.12 | 1.30 | 0.003 | 0.0008 | 0.051 | 0.053 | 0.031 | 0.20 | 0.22 | 0.0002 | 0.048 | 0.0045 | - | 0.021 | Comparative steel |
| U | 0.038 | 0.18 | 0.97 | 0.008 | 0.0005 | 0.058 | 0.057 | 0.020 | 0.19 | 0.11 | 0.0023 | 0.019 | 0.0061 | - | 0.012 | Conforming steel |
| V | 0.037 | 0.25 | 1.14 | 0.006 | 0.0003 | 0.055 | 0.051 | 0.014 | 0.27 | 0.28 | 0.0034 | 0.054 | 0.0033 | - | 0.014 | Conforming steel |
| W | 0.046 | 0.16 | 1.22 | 0.002 | 0.0008 | 0.048 | 0.041 | 0.035 | 0.19 | 0.21 | 0.0022 | 0.033 | 0.0049 | 0.12 | 0.021 | Comparative steel |

EP 3 199 657 B1

13

[Table 2]

Table 2

Table 2

| No. | Steel sample ID | Manufacturing conditions | | | | Measurement results | | | | | | SSC test | Remarks |
|---|---|---|---|---|---|---|---|---|---|---|---|---|---|
| | | Finish entry temperature (°C) | Finish temperature (°C) | Cooling rate (°C/s) | Coiling temperature (°C) | YS (MPa) | TS (MPa) | Ferrite area ratio (%) | CLR(%) | | | | |
| | | | | | | | | | Center | 1/4 width | Edge | | |
| 1 | A | 881 | 805 | 34 | 598 | 566 | 649 | 96 | 0 | 0 | 0 | Good | Example |
| 2 | B | 902 | 818 | 28 | 587 | 571 | 660 | 98 | 0 | 0 | 0 | Good | Example |
| 3 | C | 872 | 804 | 45 | 616 | 573 | 649 | 99 | 0 | 0 | 0 | Good | Example |
| 4 | D | 888 | 788 | 30 | 598 | 580 | 656 | 96 | 0 | 0 | 0 | Good | Example |
| 5 | E | 876 | 795 | 33 | 633 | 602 | 701 | 94 | 0 | 0 | 3 | Good | Example |
| 6 | F | 904 | 810 | 63 | 552 | 588 | 689 | 95 | 0 | 0 | 4 | Good | Example |
| 7 | G | 913 | 802 | 30 | 564 | 613 | 700 | 96 | 0 | 0 | 2 | Good | Comparative Example |
| 8 | H | 882 | 833 | 34 | 588 | 587 | 694 | 93 | 0 | 0 | 3 | Good | Example |
| 9 | I | 920 | 803 | 39 | 577 | 546 | 688 | 94 | 0 | 0 | 5 | Good | Example |
| 10 | A | 963 | 831 | 33 | 614 | 540 | 588 | 75 | 12 | 10 | 18 | Poor | Comparative Example |
| 11 | B | 944 | 858 | 29 | 574 | 508 | 575 | 67 | 18 | 14 | 25 | Poor | Comparative Example |
| 12 | C | 855 | 802 | 10 | 604 | 511 | 571 | 68 | 21 | 24 | 20 | Poor | Comparative Example |
| 13 | D | 868 | 811 | 29 | 542 | 524 | 599 | 30 | 17 | 45 | 37 | Poor | Comparative Example |
| 14 | J | 889 | 794 | 24 | 584 | 579 | 654 | 48 | 33 | 48 | 54 | Poor | Comparative Example |

(continued)

| Finish entry temperature (°C) | Finish delivery temperature (°C) | Cooling rate (°C/s) | Coiling temperature (°C) | YS (MPa) | TS (MPa) | Ferrite area ratio (%) | Center | 1/4 width | Edge | CLR(%) | | SSC test | |
|---|---|---|---|---|---|---|---|---|---|---|---|---|---|
| 15 | K | 875 | 807 | 35 | 604 | 581 | 670 | 68 | 34 | 28 | 54 | Poor | Comparative Example |
| 16 | L | 896 | 838 | 64 | 622 | 571 | 668 | 91 | 19 | 33 | 28 | Poor | Comparative Example |
| 17 | M | 892 | 824 | 27 | 616 | 466 | 569 | 68 | 19 | 37 | 51 | Poor | Comparative Example |
| 18 | N | 934 | 822 | 22 | 599 | 533 | 654 | 95 | 18 | 22 | 33 | Poor | Comparative Example |
| 19 | O | 887 | 831 | 30 | 636 | 477 | 563 | 59 | 29 | 42 | 55 | Poor | Comparative Example |
| 20 | P | 901 | 800 | 18 | 574 | 574 | 678 | 96 | 18 | 23 | 40 | Poor | Comparative Example |
| 21 | Q | 854 | 803 | 49 | 594 | 457 | 550 | 81 | 31 | 32 | 54 | Poor | Comparative Example |
| 22 | R | 924 | 834 | 33 | 569 | 569 | 633 | 98 | 28 | 25 | 53 | Poor | Comparative Example |
| 23 | S | 964 | 845 | 41 | 624 | 556 | 642 | 86 | 21 | 33 | 40 | Poor | Comparative Example |
| 24 | T | 898 | 844 | 29 | 608 | 522 | 604 | 86 | 30 | 50 | 49 | Poor | Comparative Example |
| 25 | U | 819 | 750 | 30 | 604 | 570 | 658 | 84 | 20 | 45 | 70 | Poor | Comparative Example |
| 26 | V | 889 | 823 | 41 | 522 | 492 | 601 | 27 | 34 | 40 | 65 | Poor | Comparative Example |
| 27 | W | 940 | 800 | 52 | 599 | 570 | 651 | 92 | 7 | 15 | 22 | Good | Comparative Example |

**Claims**

1. A steel strip for an electric-resistance-welded steel pipe or tube, the steel strip having a chemical composition containing, in mass%:

    C: 0.02% to 0.06%;
    Si: 0.1% to 0.3%;
    Mn: 0.8% to 1.3%;
    P: 0.01% or less;
    S: 0.001% or less;
    V: 0.04% to 0.07%;
    Nb: 0.04% to 0.07%;
    Ti: 0.01% to 0.04%;
    Cu: 0.2% to 0.3%;
    Ni: 0.1% to 0.3%;
    Ca: 0.001% to 0.005%;
    Al: 0.01% to 0.07%;
    N: 0.007% or less;
    optionally Sn: 0.05% or less; and
    optionally Cr, Mo, and B as incidental impurities in an amount of Cr: 0.05% or less;
    Mo: 0.03% or less; and
    B: 0.0005% or less,

    with a balance being Fe and incidental impurities, contents of C, Nb, V, and Ti satisfying a condition in the following Expression (1)

    $$[C] - 12([Nb]/92.9 + [V]/50.9 + [Ti]/47.9) \leq 0.03\% \quad \ldots (1)$$

    where [M] is content of element M in mass%,
    wherein a ferrite area ratio is 90% or more.

2. The steel strip for an electric-resistance-welded steel pipe or tube according to claim 1,
    wherein the chemical composition further satisfies a condition in the following Expression (2)

    $$[Ti]/47.9 \geq [N]/14 \qquad\qquad\qquad \ldots (2)$$

    where [M] is content of element M in mass%.

3. An electric-resistance-welded steel pipe or tube formed using the steel strip for an electric-resistance-welded steel pipe or tube according to claim 1 or 2 as a material.

4. A process for producing a steel strip for an electric-resistance-welded steel pipe or tube, the method comprising:

    hot rolling a steel raw material into a steel strip;
    cooling the steel strip; and
    coiling the cooled steel strip,

    wherein the steel raw material has a chemical composition containing, in mass%:

    C: 0.02% to 0.06%;
    Si: 0.1% to 0.3%;
    Mn: 0.8% to 1.3%;
    P: 0.01% or less;
    S: 0.001% or less;
    V: 0.04% to 0.07%;
    Nb: 0.04% to 0.07%;

Ti: 0.01% to 0.04%;
Cu: 0.2% to 0.3%;
Ni: 0.1% to 0.3%;
Ca: 0.001% to 0.005%;
Al: 0.01% to 0.07%;
N: 0.007% or less;
optionally Sn: 0.05% or less; and
optionally Cr, Mo, and B as incidental impurities in an amount of Cr: 0.05% or less;
Mo: 0.03% or less; and
B: 0.0005% or less,

with a balance being Fe and incidental impurities, contents of C, Nb, V, and Ti satisfying a condition in the following Expression (1)

$$[C] - 12([Nb]/92.9 + [V]/50.9 + [Ti]/47.9) \leq 0.03\% \quad \dots (1)$$

where [M] is content of element M in mass%,
the hot rolling includes rough rolling and finish rolling,
a finish entry temperature in the finish rolling is 950 °C or less,
a finish delivery temperature in the finish rolling is 780 °C to 850 °C,
a cooling rate in the cooling is 20 °C/s to 100 °C/s, and
a coiling temperature in the coiling is 550 °C to 700 °C.

**Patentansprüche**

1. Stahlband für ein elektrisch widerstandsgeschweißtes Stahlrohr oder eine elektrisch widerstandsgeschweißte Stahlrohrleitung, wobei das Stahlband eine chemische Zusammensetzung aufweist, die, in Massen%,
C: 0,02% bis 0,06%;
Si: 0,1% bis 0,3%;
Mn: 0,8% bis 1,3%;
P: 0,01% oder weniger;
S: 0,001% oder weniger;
V: 0,04% bis 0,07%;
Nb: 0,04% bis 0,07%;
Ti: 0,01% bis 0,04%;
Cu: 0,2% bis 0,3%;
Ni: 0,1% bis 0,3%;
Ca: 0,001% bis 0,005%;
Al: 0,01% bis 0,07%;
N: 0,007% oder weniger;
optional Sn: 0,05% oder weniger; und
optional Cr, Mo und B als zufällige Verunreinigungen in einer Menge von
Cr: 0,05% oder weniger;
Mo: 0,03% oder weniger; und
B: 0,0005% oder weniger,
beinhaltet, wobei der Rest aus Fe und zufälligen Verunreinigungen besteht, wobei die Gehalte von C, Nb, V und Ti eine Bedingung in dem nachfolgenden Ausdruck (1) erfüllen

$$[C] - 12([Nb]/92,9 + [V]/50,9 + [Ti]/47,9) \leq 0,03\% \dots(1)$$

wobei [M] der Gehalt des Elements M in Massen% ist,
wobei ein Ferritflächenanteil 90% oder mehr beträgt.

2. Stahlband für ein elektrisch widerstandsgeschweißtes Stahlrohr oder eine elektrisch widerstandsgeschweißte Stahlrohrleitung gemäß Anspruch 1, wobei die chemische Zusammensetzung weiterhin eine Bedingung in dem nach-

folgenden Ausdruck (2) erfüllt

$$[Ti]/47,9 \geq [N]/14 \qquad \dots (2),$$

wobei [M] der Gehalt des Elements M in Massen% ist.

3. Elektrisch widerstandsgeschweißtes Stahlrohr oder elektrisch widerstandsgeschweißte Stahlrohrleitung gebildet unter Verwendung des Stahlbands für ein elektrisch widerstandsgeschweißtes Stahlrohr oder eine elektrisch widerstandsgeschweißte Stahlrohrleitung gemäß Anspruch 1 oder 2 als ein Material.

4. Verfahren zur Herstellung eines Stahlbands für ein elektrisch widerstandsgeschweißtes Stahlrohr oder eine elektrisch widerstandsgeschweißte Stahlrohrleitung, wobei das Verfahren umfasst:

   Warmwalzen eines Stahl-Ausgangsmaterials in ein Stahlband;
   Abkühlen des Stahlbands; und
   Aufwickeln des Stahlbands,
   wobei das Stahl-Ausgangsmaterial eine chemische Zusammensetzung aufweist, die, in Massen%,
   C: 0,02% bis 0,06%;
   Si: 0,1% bis 0,3%;
   Mn: 0,8% bis 1,3%;
   P: 0,01% oder weniger;
   S: 0,001% oder weniger;
   V: 0,04% bis 0,07%;
   Nb: 0,04% bis 0,07%;
   Ti: 0,01% bis 0,04%;
   Cu: 0,2% bis 0,3%;
   Ni: 0,1% bis 0,3%;
   Ca: 0,001% bis 0,005%;
   Al: 0,01% bis 0,07%;
   N: 0,007% oder weniger;
   optional Sn: 0,05% oder weniger; und
   optional Cr, Mo und B als zufällige Verunreinigungen in einer Menge von
   Cr: 0,05% oder weniger;
   Mo: 0,03% oder weniger; und
   B: 0,0005% oder weniger,

   beinhaltet, wobei der Rest aus Fe und zufälligen Verunreinigungen besteht, wobei die Gehalte von C, Nb, V und Ti eine Bedingung in dem nachfolgenden Ausdruck (1) erfüllen

   $$[C] - 12([Nb]/92,9 + [V]/50,9 + [Ti]/47,9) \leq 0,03\% \dots(1)$$

   wobei [M] der Gehalt des Elements M in Massen% ist,
   wobei das Warmwalzen Vorwalzen und Endwalzen beinhaltet,
   eine Endeingangstemperatur in dem Endwalzen 950 °C oder weniger beträgt,
   eine Endausgabetemperatur in dem Endwalzen 780 °C bis 850 °C beträgt,
   eine Abkühlgeschwindigkeit in dem Abkühlen 20 °C/s bis 100 °C/s beträgt, und
   eine Haspeltemperatur in dem Aufwickeln 550 °C bis 700 °C beträgt.

**Revendications**

1. Bande d'acier pour un tuyau ou un tube soudé par résistance électrique, la bande d'acier ayant une composition chimique contenant en % en masse :

   C : 0,02 % à 0,06 % ;
   Si : 0,1 % à 0,3 % ;

Mn : 0,8 % à 1,3 % ;
P : 0,01 % ou moins;
S : 0,001 % ou moins ;
V : 0,04 % à 0,07 % ;
Nb: 0,04 % à 0,07 %;
Ti: 0,01 % à 0,04 % ;
Cu: 0,2 % à 0,3 % ;
Ni: 0,1 % à 0,3 % ;
Ca: 0,001 % à 0,005 % ;
Al: 0,01 % à 0,07 % ;
N : 0,007 % ou moins;
éventuellement Sn : 0,05 % ou moins ; et
éventuellement Cr, Mo et B comme impuretés fortuites en quantité de Cr : 0,05 % ou moins ;
Mo : 0,03 % ou moins ; et
B : 0,0005 % ou moins,

le restant étant du Fe et des impuretés fortuites, les teneurs en C, Nb, V et Ti répondant à une condition de l'expression suivante (1) :

$$[C]-12([Nb]/92,9 + [V]/50,9 + [Ti]/47,9) \leq 0,03 \% \quad ... (1),$$

où [M] est la teneur en élément M en % en masse,
dans laquelle un rapport de surface de ferrite est de 90 % ou plus.

**2.** Bande d'acier pour un tuyau ou un tube d'acier soudé par résistance électrique selon la revendication 1, dans laquelle la composition chimique répond en outre à une condition de l'expression suivante (2) :

$$[Ti]/47,9 \geq [N]/14 \qquad\qquad ... (2),$$

où [M] est la teneur en élément M en % en masse.

**3.** Tuyau ou tube d'acier soudé par résistance électrique formé en utilisant la bande d'acier pour un tuyau ou un tube d'acier soudé par résistance électrique selon la revendication 1 ou 2 comme matériau.

**4.** Procédé de production d'une bande d'acier pour un tuyau ou un tube d'acier soudé par résistance électrique, le procédé comprenant :

le laminage à chaud d'un matériau d'acier brut en une bande d'acier ;
le refroidissement de la bande d'acier ; et
l'enroulement de la bande d'acier refroidie,

dans lequel le matériau d'acier brut a une composition chimique contenant en % en masse :

C : 0,02 % à 0,06 % ;
Si : 0,1 % à 0,3 % ;
Mn : 0,8 % à 1,3 % ;
P : 0,01 % ou moins;
S : 0,001 % ou moins ;
V : 0,04 % à 0,07 % ;
Nb: 0,04 % à 0,07 %;
Ti : 0,01 % à 0,04 % ;
Cu : 0,2 % à 0,3 % ;
Ni : 0,1 % à 0,3 % ;
Ca : 0,001 % à 0,005 % ;
Al : 0,01 % à 0,07 % ;
N : 0,007 % ou moins ;

éventuellement Sn : 0,05 % ou moins ; et

éventuellement Cr, Mo et B comme impuretés fortuites en quantité de Cr : 0,05 % ou moins ;

Mo : 0,03 % ou moins ; et

B : 0,0005 % ou moins,

le restant étant du Fe et des impuretés fortuites, les teneurs en C, Nb, V et Ti répondant à une condition de l'expression suivante (1) :

$$[C]-12([Nb]/92,9 + [V]/50,9 + [Ti]/47,9) \leq 0,03 \text{ \%} \quad ... (1),$$

où [M] est la teneur en élément M en % en masse,

le laminage à chaud comprend un laminage grossier et un laminage de finition,

une température d'entrée de finition dans le laminage de finition est de 950 °C ou moins,

une température de fourniture de finition dans le laminage de finition est de 780 °C à 850 °C,

un taux de refroidissement au cours du refroidissement est de 20 °C/s à 100 °C/s et

une température d'enroulement au cours de l'enroulement est de 550 °C à 700 °C.

*FIG. 1*

EP 3 199 657 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013011005 A
- JP 2006274338 A
- WO 2014002423 A1
- EP 2868765 A1